# EUROPÄISCHE PATENTANMELDUNG

(11) **EP 4 075 009 A1**
(43) Veröffentlichungstag der Anmeldung: **19.10.2022**
(21) Anmeldenummer: 22162606.2
(22) Anmeldetag: 17.03.2022
(51) Int. Cl.: F16F 1/41, F16F 1/38, F16F 1/393

(54) **KONUSFEDER MIT EINER DIE OBERFLÄCHE DES INNENKEGELS UND DES AUSSENRINGS VERGRÖSSERNDEN OBERFLÄCHENSTRUKTUR**

(30) Priorität: 16.04.2021 DE 102021203813
(71) Anmelder: ContiTech Luftfedersysteme GmbH, 30165 Hannover (DE)
(72) Erfinder: Kranz, Harald, 30165 Hannover (DE)
(74) Vertreter: Continental Corporation

(57) **Zusammenfassung**

Die Erfindung betrifft eine Konusfeder (2) aufweisend, einen Innenkegel (4), einen Außenring (6) und ein dazwischen angeordnetes elastomeres Bauteil (8), wobei das elastomere Bauteil (8) über Haftungsflächen (10) mit dem Innenkegel (4) und dem Außenring (6) verbunden ist. Die Haftungsflächen (10) des Innenkegels (4) und des Außenrings (6) weisen erfindungsgemäß eine die Oberfläche vergrößernde Oberflächenstruktur (12) auf.

## Beschreibung

Die Erfindung betrifft eine Konusfeder aufweisend, einen Innenkegel, einen Außenring und ein dazwischen angeordnetes elastomeres Bauteil, wobei das elastomere Bauteil über Haftungsflächen mit dem Innenkegel und dem Außenring verbunden ist.

### Stand der Technik

Konusfedern können sowohl als alleiniges Federelement in Form einer sogenannten Primärfeder, oder in Form einer Sekundärfeder als Teil eines Federungssystems, bestehend aus weiteren Feder- und Dämpfungselementen, zum Einsatz kommen.

Eine beispielhafte Anwendung einer Konusfeder als Sekundärfeder ist in der DE 10 2016 222 663 A1 offenbart. Hier ist die Konusfeder als Notfeder ausgebildet und mit einem Luftfederbalg in Reihe geschaltet. Die Konusfeder übernimmt die Federungsfunktion in diesem Anwendungsfall erst dann, wenn beispielsweise ein Defekt an dem Luftfederbalg entsteht und dieser seine Federungsfunktion nicht mehr erfüllen kann.

Üblicher Weise umfasst eine solche Konusfeder einen Verbund aus einem elastomeren Dämpfungskörper, der zwischen zwei Metallteilen angeordnet ist. Eines der Metallteile ist als innerer Konus ausgebildet. Dieser Konus wird an der kegelförmigen Kontur von dem elastomeren Körper umfasst und kann darüber hinaus ein Anschlusselement zur Anbindung der Konusfeder aufweisen, zum Beispiel an Fahrwerksteile eines Schienenfahrzeuges. Das weitere Teil ist als ein metallischer Außenring ausgebildet, der mit dem elastomeren Dämpfungskörper auf, der dem Konus gegenüberliegenden Seite, in Verbindung steht. Alternativ können der Konus und der Außenring zur Gewichtsersparnis auch aus Kunststoff gefertigt sein. Die Kontaktflächen zur Anbindung an den elastomeren Körper sind glatt ausgeführt und mit einem Haftvermittler zur Verbesserung der Adhäsion der verschiedenen Materialien untereinander vorbehandelt.

Unabhängig von dem gewählten Material stellt die Verbindung des Konus und des Außenrings mit dem elastomeren Dämpfungskörper eine große Herausforderung dar. Durch die unterschiedlichen Elastizitätsmodule des Elastomerkörpers und der mit diesem in Verbindung stehenden Bauteile gilt insbesondere der Bereich des Materialübergangs zwischen Elastomer und dem weiteren Material als Schwachstelle. In diesem Bereich treten besonders hohe spezifische mechanische Spannungen auf, weshalb die Verbindung ein häufig anzutreffendes Ausfallkriterium darstellt. Es erweist sich außerdem als nachteilig, dass die Verbindungsstellen nicht zerstörungsfrei geprüft werden können, weshalb Ausfälle oft unerwartet geschehen. Zur Vorbeugung von unvorhersehbaren Ausfällen der Konusfeder werden diese häufig frühzeitig und deutlich vor Erreichen ihrer eigentlichen Lebensdauergrenze gewechselt, was zu hohen Wartungs- und Instandhaltungskosten führt.

### Aufgabe

Vor diesem Hintergrund liegt der Erfindung die Aufgabe zugrunde, eine Konusfeder bereit zu stellen, welche die eingangs beschriebenen Nachteile dahingehend ausräumt, dass die Haftung des Elastomers an dem Innenkegel und dem Außenring optimiert wird.

### Lösung der Aufgabe

Die Lösung dieser Aufgabe ergibt sich durch eine erfindungsgemäße Konusfeder, bei der gemäß dem Hauptanspruch die Haftungsflächen des Innenkegels und des Außenrings eine die Oberfläche vergrößernde Oberflächenstruktur aufweisen. Weitere vorteilhafte Ausbildungen sind in den abhängigen Ansprüchen offenbart.

### Vorteile der Erfindung

Die in dem Anspruch 1 offenbarte erfindungsgemäße Konusfeder weist einen Innenkegel, einen Außenring und ein dazwischen angeordnetes elastomeres Bauteil auf, wobei das elastomere Bauteil über Haftungsflächen mit dem Innenkegel und dem Außenring verbunden ist. Die Haftungsflächen des Innenkegels und des Außenrings weisen eine die Oberfläche vergrößernde Oberflächenstruktur auf. Hieraus kann sich auf besonders vorteilhafte Weise ergeben, dass die Vergrößerung der Haftungsfläche des Elastomers auf dem Innenkegel und dem Außenring eine Verringerung der Materialspannungen bewirkt. Die Belastung des Elastomerkörpers kann mit anderen Worten gesagt reduziert werden. Eine Verringerung der mechanischen Belastung kann dazu führen, dass die Lebensdauer der Konusfeder bei gleicher Belastung und Dimensionierung steigt. Es kann so beispielsweise einer Ablösung des Elastomerkörpers von Außenring und Innenkegel und einem frühzeitigen Bauteilversagen durch eine zu hohe Belastung vorgebeugt werden.

Weiterhin kann sich durch geringere Anforderungen an die mechanische Belastung des Elastomerkörpers die Möglichkeit ergeben, günstigere Materialien zu verwenden und hierdurch wirtschaftliche Vorteile zu generieren.

Als weiterer Vorteil kann sich ergeben, dass die erfindungsgemäße Maßnahme zur Verbesserung der Haftungseigenschaften des Elastomers an Innenkegel und Außenring zu einer höheren Belastungsfähigkeit der Konusfeder führen kann, wodurch diese in neuen Anwendungsbereichen eingesetzt werden kann, deren Anforderungen die Belastungsfähigkeit bisheriger Konusfedern nicht erfüllen konnten.

Gemäß einem weiteren Aspekt ist die Oberflächenvergrößerung durch eine Aufrauhung erzeugt. Diese Art der Oberflächenvergrößerung kann zum Beispiel durch Anschleifen der Oberflächen erzeugt werden, was durch manuelle Bearbeitung auch bei kleinen Stückzahlen ohne Investition in spezielle Werkzeuge und Maschinen wirtschaftlich erfolgen kann.

Eine weitere vorteilhafte Ausführung sieht vor, dass die Oberflächenvergrößerung erfindungsgemäß durch eine plastische Verformung erzeugt ist. Hierdurch lassen sich spezielle Oberflächengeometrien erzeugen, welche unter Einsatz programmierbarer Maschinen in industriellem Maßstab reproduzierbar und unter gleichbleibender Qualität hergestellt werden können.

Gemäß einem weiteren Aspekt der vorliegenden Erfindung ist die Oberflächenvergrößerung durch Urformen erzeugt. Dazu eignet sich besonders das Gießverfahren. Auf besonders vorteilhafte Weise kann hierdurch eine mechanische Nachbearbeitung der Bauteile entfallen. Durch das Einsparen zusätzlicher Fertigungsschritte kann die Herstellung somit besonders wirtschaftlich erfolgen.

Gemäß einem weiteren Aspekt der vorliegenden Erfindung ist die Oberflächenstruktur symmetrisch zur Hochachse ausgebildet. Hierdurch kann auf besonders vorteilhafte Art und Weise sichergestellt werden, dass die Federungseigenschaften der Konusfeder nicht richtungsabhängig verändert werden. Mit anderen Worten gesagt folgt die Oberflächenstruktur über die gesamte Bauteiloberfläche einer gleichbleibenden Symmetrie gegenüber der Hochachse der Konusfeder, wobei die Belastungsrichtung im Wesentlichen zur Hochachse parallel gerichtet ist. Hierdurch kann eine gleichmäßige Spannungsverteilung im Elastomerkörper sichergestellt werden. Spannungsspitzen, die zu einem verfrühten Bauteilversagen führen könnten, können auf diese Weise vermieden werden.

Eine weitere vorteilhafte Ausführungsform sieht vor, dass die Haftungsflächen mit einem Haftvermittler vorbehandelt ausgeführt sind. Durch die zusätzliche Verwendung eines Haftvermittlers ergibt sich auf vorteilhafte Weise, dass die Haftung zwischen dem Elastomer und dem Innenkegel und dem Elastomer und dem Außenring nochmals gesteigert werden kann. Hierdurch können die zuvor genannten Vorteile einer höheren Belastungsfähigkeit und Ausfallsicherheit der Konusfeder nochmals optimiert werden. Außerdem ist eine kostengünstige Materialauswahl möglich.

Gemäß einem weiteren Aspekt der vorliegenden Erfindung ist eine Schienenfahrzeugfederung vorgesehen, welche eine erfindungsgemäße Konusfeder umfasst. Hierdurch lassen sich die zuvor genannten Vorteile auf eine Schienenfahrzeugfederung übertragen.

### Erläuterung Figuren

Anhand der Figuren werden im Folgenden Ausführungsbeispiele der Erfindung näher erläutert.
Fig. 1 zeigt die Schnittdarstellung einer erfindungsgemäßen Konusfeder.
Fig.2 bis 4 zeigen verschiedene Ausführungsformen einer Oberflächenstruktur des Innenkegels in der Draufsicht.

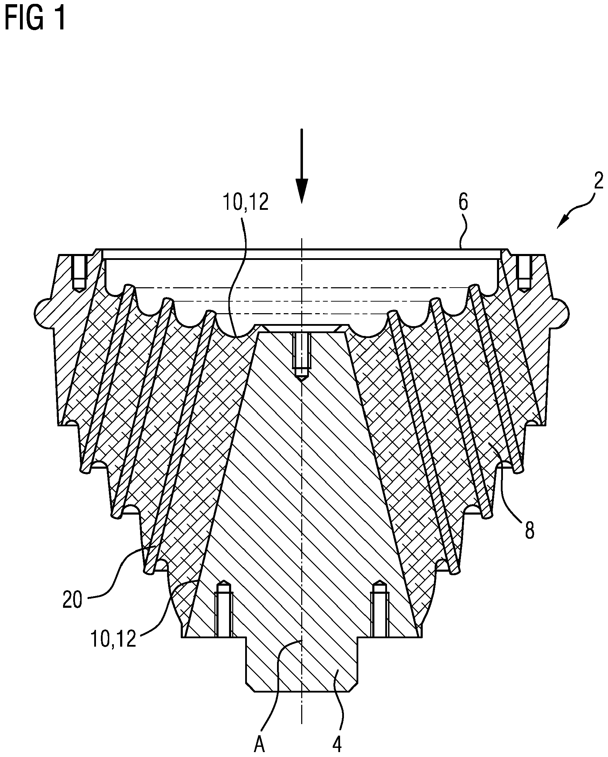

Figur 1 zeigt die Schnittdarstellung einer erfindungsgemäßen Konusfeder 2. Die Konusfeder 2 umfasst einen Innenkegel 4, ein elastomeres Bauteil 8 und einen Außenring 6. Das elastomere Bauteil ist mit dem Innenkegel 4 und dem Außenring 6 über Haftungsflächen 10 verbunden. Die Haftungsflächen 10 verfügen erfindungsgemäß über eine die Oberfläche der Haftungsflächen 10 vergrößernde Oberflächenstruktur 12. Die Konusfeder ist rotationssymmetrisch um eine Hochachse A ausgebildet. Weiterhin ist die Konusfeder 2 in einer Variante mit Zwischenblechen 20 dargestellt. Die Zwischenbleche 20 dienen zur Versteifung der Konusfeder 2, wodurch die Kennlinie der Konusfeder 2 den anwendungsgemäßen Anforderungen angepasst werden kann. Die Steifigkeit kann sowohl über die Anzahl das Material und die Stärke der Zwischenbleche 20 angepasst werden. Eine Konusfeder 2 kann ebenso auch ohne Zwischenbleche 20 ausgeführt sein.

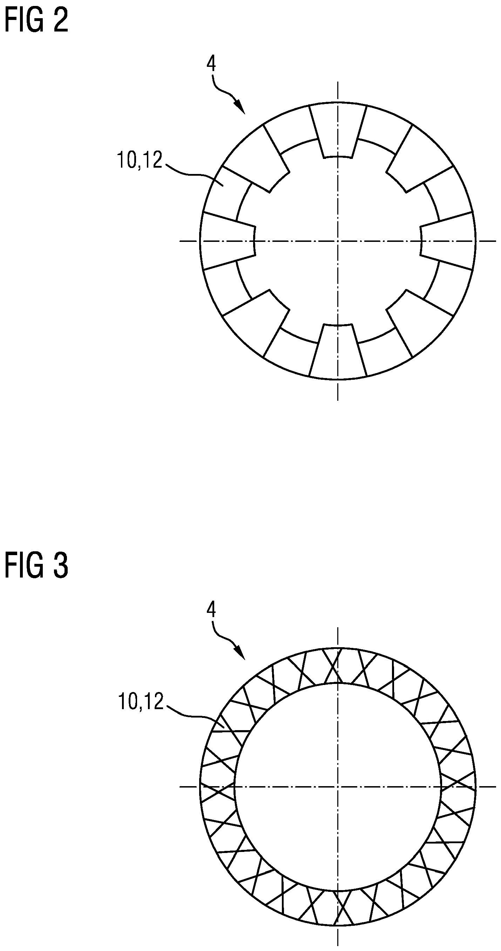

Die Figuren 2 bis 4 zeigen verschiedene Ausführungsformen der Oberflächenstruktur des Innenkegels in der Draufsicht. Die Darstellungen können als repräsentativ für die analog dazu ausgebildete Oberflächenstruktur des Außenrings 6 angenommen werden.

Figur 2 offenbart die Oberflächenstruktur 12 des Innenkegels 4 als ein Zahnprofil. Hierbei sind über den Umfang des Innenkegels 4 in Richtung der Hochachse A verlaufende Zahnvertiefungen 14 eingebracht. Durch die Flanken des Zahnprofils wird die Haftungsfläche 10 zusätzlich vergrößert.

Figur 3 offenbart die Oberflächenstruktur 12 des Innenkegels 4 als eine aufgerauhte oder symmetrisch profilierte Struktur. Die Oberflächenstruktur 12 zeichnet sich durch eine zum Beispiel durch Schleifen erzeugte Oberflächenrauhigkeit aus, die durch die Vielzahl an Poren die Haftungsfläche 10 vergrößert. Die Oberflächenstruktur 12 kann aber auch durch verschiedene Ur- oder Umformprozesse erzeugt werden. Hierzu können beispielsweise Gießverfahren oder auch Präge- oder Walzverfahren zum Einsatz kommen.

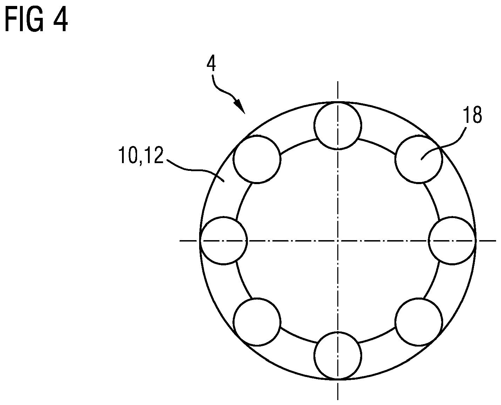

Eine weitere Möglichkeit besteht gemäß Figur 4 darin, die Oberfläche 12 mit Einbuchtungen 18 zu versehen. Auch die Einbuchtungen können mit den zu Fig.3 genannten Fertigungsverfahren erzeugt werden. Gemäß der dargestellten Ausführungsform weist die Oberfläche 12 eine golfballartige Struktur auf.

Alle Ausführungsformen der Oberflächenstrukturen 12 zuvor erläuterten Figuren haben gemeinsam, dass diese eine Oberflächenvergrößerung der Haftungsfläche 10 bewirken. Hierdurch kann erfindungsgemäß erzielt werden, dass die Haftungseigenschaften des Elastomers an dem Innenkegel und dem Außenring verbessert werden.

### Bezugszeichenliste

- A: Hochachse

- 2.: Konusfeder
- 4.: Innenkegel
- 6.: Außenring
- 8.: Elastomeres Bauteil
- 10.: Haftungsflächen
- 12.: Oberflächenstruktur
- 14.: Zahnvertiefung
- 16.: Flanke
- 18.: Einbuchtung
- 20.: Zwischenblech

## Patentansprüche

1. Konusfeder (2) aufweisend, einen Innenkegel (4), einen Außenring (6) und ein dazwischen angeordnetes elastomeres Bauteil (8), wobei das elastomere Bauteil (8) über Haftungsflächen (10) mit dem Innenkegel (4) und dem Außenring (6) verbunden ist,
**dadurch gekennzeichnet, dass**
die Haftungsflächen (10) des Innenkegels (4) und des Außenrings (6) eine die Oberfläche vergrößernde Oberflächenstruktur (12) aufweisen.

2. Konusfeder (2) nach Anspruch 1,
**dadurch gekennzeichnet, dass**
die Oberflächenvergrößerung durch eine Aufrauhung erzeugt ist.

3. Konusfeder (2) nach Anspruch 1,
**dadurch gekennzeichnet, dass**
die Oberflächenvergrößerung durch eine plastische Verformung erzeugt ist.

4. Konusfeder (2) nach Anspruch 1,
**dadurch gekennzeichnet, dass**
die Oberflächenvergrößerung durch Urformen erzeugt ist.

5. Konusfeder (2) nach einem der vorhergehenden Ansprüche,
**dadurch gekennzeichnet, dass**
die Oberflächenstruktur (12) symmetrisch zur Hochachse (A) ausgebildet ist.

6. Konusfeder (2) nach einem der vorhergehenden Ansprüche,
**dadurch gekennzeichnet, dass**
die Haftungsflächen (10) mit einem Haftvermittler vorbehandelt ausgeführt sind.

7. Schienenfahrzeugfederung umfassend eine Konusfeder nach einem der Ansprüche 1 bis 6.
